# EUROPÄISCHE PATENTANMELDUNG

(11) **EP 3 993 231 A1**
(43) Veröffentlichungstag der Anmeldung: **04.05.2022**
(21) Anmeldenummer: 21204422.6
(22) Anmeldetag: 25.10.2021
(51) Int. Cl.: H02K 3/28, H02K 5/22, H02K 7/102, H02K 11/20, H02K 15/00

(54) **ENTRIEGELUNG EINER ELEKTROMAGNETISCHEN BREMSE EINES MOTORS**

(30) Priorität: 29.10.2020 DE 102020213640
(71) Anmelder: MAHA Maschinenbau Haldenwang GmbH & Co. KG, 87490 Haldenwang (DE)
(72) Erfinder: HIEMER, Michael, 87452 Altusried (DE); WAGNER, Oliver, 87490 Prinzenbuckel (DE); THALHEIMER, Christian, 87452 Krugzell (DE)
(74) Vertreter: MERH-IP Matias Erny Reichl Hoffmann Patentanwälte PartG mbB

(57) **Zusammenfassung**

Die vorliegende Offenbarung betrifft die Entriegelung einer elektromagnetischen Bremse 4 eines Drehstrommotors 2 mit weniger Aufwand, insbesondere bei der Wartung oder Montage einer Vorrichtung 1 mit der elektromagnetischen Bremse und dem Motor 2.

## Beschreibung

Die vorliegende Offenbarung betrifft die Entriegelung einer elektromagnetischen Bremse eines Drehstrommotors mit weniger Aufwand; insbesondere ist dies bei der Wartung oder Montage einer Vorrichtung mit elektromagnetischer Bremse und einem Motor von technischem Vorteil.

Im Stand der Technik sind Vorrichtungen mit einem Motor und einer elektromagnetischen Bremse bekannt: Beispielsweise können hier Fahrzeugprüfstände oder dgl. genannt werden und konkret beispielsweise Fahrzeugbremsprüfstände. Nachteilig ist allerdings, dass die Bremse im stromlosen Zustand geschlossen ist und somit die Wartung oder die Montage der Vorrichtung nur mit großem Aufwand möglich ist, da die Bremse den Motor sperrt.

Es liegt die technische Aufgabe vor, eine Verbesserung im Hinblick auf die oben beschriebene Ausgangsituation herbeizuführen, die eine Wartung oder eine Montage mit zumindest weniger Aufwand ermöglicht.

Diese Aufgabe wird von dem Gegenstand der unabhängigen Patentansprüche gelöst. Weitere bevorzugte Weiterentwicklungen der Erfindung sind in den abhängigen Patentansprüchen beschrieben.

Gemäß einem Aspekt wird hier eine Vorrichtung beschrieben, die einen Drehstrommotor, einen elektrischen Gleichrichter zur Umwandlung von Wechsel-/Drehstrom in Gleichstrom (oder pulsierenden Gleichstrom), eine elektromagnetische Bremse, die mit einem Gleichstromausgang des elektrischen Gleichrichters elektrisch verbunden sein kann (unter Berücksichtigung der unterschiedlichen Potentiale genauer: mit zwei Gleichstromausgängen), eine Anschlusseinrichtung, die eine Vielzahl elektrischer Kontaktmittel umfassen kann, und elektrische Leitungen/Verbindungen aufweisen kann, die zwischen den Kontaktmitteln und dem Drehstrommotor oder dem Gleichrichter angeordnet sein können.

Die Vorrichtung kann unterschiedliche technische Einsatzzwecke und konkrete Bauformen annehmen, wobei insbesondere das Vorhandensein von Motor und elektromagnetischer Bremse im Fokus dieser Anmeldung stehen. Beispielsweise kann die Vorrichtung aus dem Bereich der Kraftfahrzeugtechnik stammen und konkret beispielsweise einen Kraftfahrzeugprüfstand, wie z.B. einen Bremsprüfstand, umfassen.

An den Drehstrommotor und den elektrischen Gleichrichter werden keine besonderen Spezifikationen/Anforderungen gestellt und diese können Standardbauteile sein, ebenso wie die elektromagnetische Bremse, die von dem Gleichrichter mit elektrischer Energie versorgt wird. Der Gleichrichter wandelt bevorzugt Wechsel-/Drehstrom in (pulsierenden) Gleichstrom um, womit die elektromagnetische Bremse betreibbar ist.

Die Anschlusseinrichtung kann einen Anschluss der Vorrichtung für Stecker oder elektrische Zuführungen/Leitungen umfassen und bevorzugt weist diese Anschlusseinrichtung eine weibliche oder männliche Steckerform auf, um einen weiblichen oder männlichen Stecker von außen daran anzuschließen. Die Kontaktmittel der Anschlusseinrichtung sind entsprechend entweder männlich oder weiblich ausgeprägt. Es ist auch möglich, dass die Kontaktmittel verschiedene Formgebungen bezüglich der männlichen und weiblichen Form haben. Die Kontaktmittel umfassen bevorzugt in der männlichen Form herausstehende Steckpins, -stifte, -dorne oder dgl. und in der weiblichen Form Stecköffnungen bzw. -aufnahmen. Die Kontaktmittel sind ferner dazu eingerichtet, mit elektrischen Leitungen, bspw. Kabeln oder dgl., mechanisch verbunden zu werden. Dies kann beispielsweise über Löten, Crimpen, Schrauben, usw. ausgeführt sein.

Ferner können die elektrischen Leitungen, beispielsweise elektrische Kabel, Einzeladern und/oder auf einer oder mehreren Platinen aufgebrachte Leiterbahnen, folgende Leitungen (neben allgemeinen, nicht näher bezeichneten Leitungen) umfassen: eine Vielzahl elektrischer Motoranschlussleitungen, die jeweils ein Kontaktmittel mit dem Drehstrommotor bzw. einem Pol dessen elektrisch verbinden können, zumindest eine elektrische Gleichrichteranschlussleitung, die ein Kontaktmittel mit einem ersten Eingang des Gleichrichters verbinden kann, zumindest eine erste elektrische Verbindungsleitung, die ein Kontaktmittel mit einer Motoranschlussleitung verbinden kann und zumindest eine zweite elektrische Verbindungsleitung, die eine andere Motoranschlussleitung mit einem zweiten Eingang des Gleichrichters verbinden kann.

Der technische Vorteil, der sich insbesondere aus der internen Vorrichtungsverschaltung/-verkabelung der einzelnen Bauteile inklusive der Kontaktmittel der Anschlusseinrichtung ergibt, liegt darin, dass die beiden elektrischen Verbindungsleitungen und ihre Anordnung/Verbindungsanordnung die Möglichkeit eröffnen, einen Normalbetrieb des Motors durchzuführen und außerdem (mittels der nachfolgend dargelegten Stecker und Steckersysteme) die Bremse zu lösen, ohne den (Drehstrom-)Motor bestromen/elektrisch antreiben zu müssen. Dies vereinfacht die Wartung und/oder die Montage der Vorrichtung erheblich, da keine (im Stand der Technik notwendigen) aufwendigen Umbauarbeiten getätigt werden müssen, um die Bremse lösen zu können. Mittels der beiden elektrischen Verbindungsleitungen werden unterschiedliche Möglichkeiten bereitgestellt, die Bremse mit (elektrischem) Strom zu versorgen, ohne den Motor anzutreiben. Beispielweise können zwei der drei Phasen des Drehstrommotors mit Strom gespeist werden, so dass der Motor nicht anläuft, aber der Gleichrichter die Bremse antreibt. Auch kann eine Phase des Motors, die auch über die Verbindungsleitung an den Gleichrichter angeschlossen ist, und die Gleichrichterleitung mit Strom gespeist werden, um den Motor deaktiviert zu belassen, aber die Bremse zu aktivieren/bestromen. Weitere Kombinationen sind denkbar und können mittels Stecker, Adaptern, Kabelzuleitungen oder dgl., wie nachfolgende Aspekte aufzeigen, kostengünstig realisiert werden und bei der Montage/Wartung ohne großen Aufwand zum Einsatz gebracht werden.

Ferner können die Kontaktmittel der Anschlusseinrichtung jeweils mit zumindest einer elektrischen Leitung belegt/mechanisch verbunden sein. Somit ist eine klare und wenig komplexe Zuordnung der Kontaktmittel möglich und die Montage der Vorrichtung oder deren Wartung, insbesondere bei Verkabelungsarbeiten oder elektrischen Anschlussarbeiten, kann effizient ausgeführt werden.

Ferner kann für jeden Pol bzw. jede Phase des Drehstrommotors eine (eigene, separate) Motoranschlussleitung vorgesehen sein, die jeweils mit einem einzelnen/separaten Kontaktmittel verbunden sein kann.

Ferner kann eine elektrische Leitung als Schutzleitung bzw. als Nullleitung mit dem Drehstrommotor bzw. einer elektrischen Masse dessen und einem weiteren Kontaktmittel verbunden sein.

Ferner kann der Drehstrommotor zumindest dreipolig ausgeführt sein und die Anschlusseinrichtung kann sechs Kontaktmittel aufweisen, wobei drei der sechs Kontaktmittel jeweils mit einer einzelnen Motoranschlussleitung belegt/elektrisch verbunden sein können und die drei Motoranschlussleitungen jeweils eine Phase bzw. einen Pol des Drehstrommotors mit Strom beaufschlagen können. Ein weiteres/viertes Kontaktmittel kann mit einer Schutzleitung, die mit dem Drehstrommotor bzw. einer elektrischen Masse dessen verbunden ist, belegt sein. Ein weiteres/fünftes Kontaktmittel kann mit der Gleichrichteranschlussleitung verbunden sein und ein weiteres/sechstes Kontaktmittel mit der ersten elektrischen Verbindungsleitung verbunden sein.

Diese Anordnung der Leitungen und die Belegung der Kontaktmittel ermöglichen insbesondere bei einer übersichtlichen und wenig komplexen elektrischen Verbindungskonfiguration die technischen Vorteile der Vorrichtung, wie oben erläutert. Die Vorrichtung kann möglichst kompakt ausgeführt sein.

Eine weitere Alternative, bei der die erste Verbindungsleitung nicht innerhalb der Vorrichtung angeordnet ist bzw. bei der die erste Verbindungsleitung nicht vorhanden ist, umfasst eine Kombination der Brückenleitung mit der ersten Verbindungsleitung. Konkret kann gemäß dieser Alternative die Brückenleitung innerhalb des Steckers auch die Funktion der ersten Verbindungsleitung übernehmen. In diesem Fall kann die Anschlusseinrichtung auch nur fünf Kontaktmittel aufweisen; ebenso der Stecker. Ein Beispiel für eine solche Konfiguration ist, dass die Brückenleitung die Kontaktmittel verbindet, die in der nachfolgenden Figurenbeschreibung mit 21b und 21f bezeichnet sind. Je nach Belegung der Kontaktmittel können selbstverständlich auch andere Kontaktmittel mit der Brückenleitung verbunden sein. Der Gesamtaufbau der Vorrichtung und des Steckers wird dadurch noch kompakter und weniger komplex.

Eine weitere Alternative kann zudem umfassen, dass die zweite Verbindungsleitung innerhalb der Vorrichtung entfällt und das in den Figuren mit 5e gekennzeichnete Kontaktmittel direkt mit dem Eingang des Gleichrichters verbunden ist. In diesem Fall liegen innerhalb der Vorrichtung keine Verbindungsleitungen vor und der Stecker hat zusätzlich zu der oben bereits beschriebenen Brückenleitung zwischen den Kontaktmitteln 21b und 21f noch eine zweite Brückenleitung zwischen den Kontaktmitteln 21a und 21e. Dadurch wird die Konfiguration der Vorrichtung noch weniger komplex.

Auch kann ein Kontaktmittel eingespart werden, falls keine Nullleitung vorgesehen sein sollte.

Ferner kann die Anschlusseinrichtung eingerichtet sein, eine Steckverbindung mit einem Gegenelement herzustellen, um mit wenig Aufwand eine elektrische Zuleitung an die Vorrichtung anschließen zu können bzw. diese wechseln zu können. Die Kontaktmittel können entweder weibliche Kontaktöffnungen und/oder männliche Kontaktstifte umfassen, um größtmögliche Anschlussflexibilität zu bieten. Die Steckverbindung kann schnell und ohne großen Aufwand durchgeführt werden.

Gemäß einem weiteren Aspekt wird hier ein Stecker zum Anschluss an die Vorrichtung gemäß den vorbeschriebenen Aspekten und Modifikationen beschrieben. Der Stecker kann folgende Bauteile/Komponenten umfassen: eine Vielzahl inverser Kontaktmittel und bevorzugt zumindest gleich viele wie die Anschlusseinrichtung der Vorrichtung Kontaktmittel aufweist. Der Begriff bzw. die Kennzeichnung "invers" soll hier klarstellen, dass die Kontaktmittel des Steckers genau gegenteilig in Bezug auf deren Form männlich oder weiblich ausgestaltet sind zu den Kontaktmitteln der Anschlusseinrichtung.

Die inversen Kontaktmittel können mit jeweils einem Kontaktmittel der Anschlusseinrichtung verbindbar sein. Insbesondere können die inversen Kontaktmittel, die jeweils mit einem Pol des Drehstrommotors verbindbar sind, mit stromführenden Leitungen unterschiedlicher Phasen verbunden sein. Die inversen Kontaktmittel, die mit den Kontaktmitteln der Anschlusseinrichtung verbindbar sind, die mit der ersten elektrischen Verbindungsleitung und der Gleichrichteranschlussleitung verbunden sind, können mittels einer Brückenleitung miteinander elektrisch verbunden sein. Bevorzugt können diese beiden inversen Kontaktmittel kurzgeschlossen sein und dies besonders bevorzugt innerhalb des Steckers mittels der Brückenleitung.

Dieser Stecker ermöglicht, dass im normalen Motorbetrieb die drei Phasen des Motors und ggf. die Nullleitung direkt mit elektrischen Leitungen verbunden sind, wobei die drei Phasen den Motor mit Drehstrom versorgen, um diesen anzutreiben. Die Brückenleitung des Steckers sowie die erste und die zweite Verbindungsleitung der Vorrichtung sorgen ferner für eine Stromversorgung des Gleichrichters bzw. der Bremse stromab zu dem Gleichrichter. Es ist somit ein Normalbetrieb möglich, ohne dass besondere Vorkehrungen oder dgl. getroffen werden müssten.

Gemäß einem weiteren Aspekt wird hier ein Stecker zum Anschluss an die Vorrichtung gemäß den vorbeschriebenen Aspekten und Modifikationen beschrieben. Der Stecker kann eine Vielzahl inverser Kontaktmittel umfassen, wobei ein inverses Kontaktmittel, das im mit der Anschlusseinrichtung gesteckten Zustand mit der zweiten elektrischen Verbindungsleitung elektrisch verbunden sein kann, und ein weiteres inverses Kontaktmittel, das im mit der Anschlusseinrichtung gesteckten Zustand mit der Gleichrichteranschlussleitung elektrisch verbunden sein kann, jeweils mit einer elektrischen Strom führenden Zuleitung verbunden sein kann oder verbindbar sein kann. Dieser Stecker bzw. Adapter bzw. Kupplung bzw. Kabel bzw. Kombination daraus kann bevorzugt eingesetzt werden, wenn eine Wechselstromquelle bereits vorliegt und diese direkt mit den inversen Kontaktmitteln des Steckers verbunden ist/verbindbar ist, die Strom zu dem elektrischen Gleichrichter der Vorrichtung leiten. Der Aufbau eines solchen Systems ist mit besonders wenig Aufwand verbunden und die Bremse kann ohne Aktivierung des Motors gelöst werden.

Gemäß einem weiteren Aspekt wird hier ein Steckersystem zum Anschluss an die vorbeschriebene Vorrichtung umfassend einen ersten Stecker gemäß obiger Ausführungen beschrieben. Das Steckersystem kann ein Adapter bzw. Kupplung bzw. Kabel bzw. Kombination daraus sein oder umfassen. Ferner enthält das Steckersystem einen zweiten Stecker mit einer Vielzahl von Kontaktmitteln und einem zweiten elektrischen Gleichrichter zum Umwandeln von Wechsel-/Drehstrom in Gleichstrom (bevorzugt gepulst/Mischspannung). Ferner können zwei Kontaktmittel des zweiten Steckers mittels elektrischer Leitungen jeweils mit (einem Wechsel-/Drehstromeingang des) dem zweiten elektrischen Gleichrichter(s) verbunden sein und zwei inverse Kontaktmittel des ersten Steckers können mittels elektrischen Leitungen jeweils mit (einem Gleichstromausgang des) dem zweiten elektrischen Gleichrichter(s) verbunden sein. Eines der beiden inversen Kontaktmittel kann im mit der Anschlusseinrichtung gesteckten Zustand mit der zweiten elektrischen Verbindungsleitung elektrisch verbunden sein und das andere der beiden inversen Kontaktmittel kann im mit der Anschlusseinrichtung gesteckten Zustand mit der Gleichrichteranschlussleitung elektrisch verbunden sein.

Dieses Stecksystem, das einen eigenen Gleichrichter umfassen kann, ermöglicht es, dass beispielsweise ein Haushaltsstromanschluss direkt mittels des zweiten Steckers an den Gleichrichter angeschlossen werden kann. Der zweite Stecker kann die entsprechende Form aufweisen, d.h. beispielsweise Schuko oder Cekon.

Gemäß einem weiteren Aspekt wird hier ein Steckersystem zum Anschluss an die vorbeschriebene Vorrichtung umfassend einen ersten Stecker gemäß obiger Ausführungen beschrieben. Ferner enthält das Steckersystem einen zweiten Stecker mit einer Vielzahl Kontaktmitteln, einem zweiten elektrischen Gleichrichter zum Umwandeln von Wechsel-/Drehstrom in Gleichstrom und einem Spannungswandler. Zwei Kontaktmittel des zweiten Steckers können mittels elektrischer Leitungen jeweils mit einem Eingang des Spannungswandlers verbunden sein, der Ausgang des Spannungswandlers kann mit einem Wechsel-/Drehstromeingang des zweiten elektrischen Gleichrichters verbunden sein und zwei inverse Kontaktmittel des ersten Steckers können mittels elektrischen Leitungen jeweils mit einem Gleichstromausgang des zweiten elektrischen Gleichrichters verbunden sein. Eines der beiden inversen Kontaktmittel kann im mit der Anschlusseinrichtung gesteckten Zustand mit der zweiten elektrischen Verbindungsleitung elektrisch verbunden sein und das andere der beiden inversen Kontaktmittel kann im mit der Anschlusseinrichtung gesteckten Zustand mit der Gleichrichteranschlussleitung elektrisch verbunden sein.

Diese Option ermöglicht es, Spannungswandlung über einen Transformator oder dgl. durchzuführen, um beispielsweise auch Starkstromanschlüsse mit dem zweiten Stecker verbinden zu können und/oder andere Netzspannungen in anderen Ländern.

Weiterhin kann der zweite Stecker auch entfallen und der Stromanschluss direkt auf den Spannungswandler oder den zweiten elektrischen Gleichrichter angeschlossen werden. Dies ist bezüglich des Aufbaus noch weniger aufwendig, da der zweite Stecker entfallen kann.

Gemäß einem weiteren Aspekt wird hier ein Steckersystem zum Anschluss an die vorbeschriebene Vorrichtung umfassend einen ersten Stecker gemäß obiger Ausführungen beschrieben. Ferner enthält das Steckersystem einen zweiten Stecker mit einer Vielzahl Kontaktmittel, wobei ein Kontaktmittel des zweiten Steckers mittels einer elektrischen Leitung mit einem inversen Kontaktmittel, das im mit der Anschlusseinrichtung gesteckten Zustand mit der zweiten elektrischen Verbindungsleitung elektrisch verbunden ist, verbunden sein kann und ein weiteres Kontaktmittel des zweiten Steckers mittels einer elektrischen Leitung mit einem inversen Kontaktmittel, das im mit der Anschlusseinrichtung gesteckten Zustand mit der Gleichrichteranschlussleitung elektrisch verbunden ist, verbunden sein kann. Der erste und der zweite Stecker sind hier folglich direkt mittels elektrischer Verbindungen miteinander verbunden (bzw. deren Kontaktmittel) und der Aufbau dieses Adapters umfasset bevorzugt im Wesentlichen nur die beiden Stecker und die Verbindungsleitungen zwischen diesen. Der Aufbau ist somit sehr günstig und wenig komplex.

Alle oben beschriebenen Stecker und Steckersysteme ermöglichen grundsätzlich eine wenig komplexe Aktuierung/Bestromung der Bremse der Vorrichtung, ohne den Motor der Vorrichtung aktivieren zu müssen bzw. anzutreiben.

Gemäß weiterer Aspekte können Systeme umfassend die Vorrichtung und einer der Stecker oder Steckersysteme im gesteckten Zustand umfassen.

Gemäß einem weiteren Aspekt wird ein Verfahren zum Öffnen einer elektromagnetischen Bremse einer Vorrichtung gemäß einem der vorbeschriebenen Aspekte bzw. Modifikationen beschrieben und das Verfahren umfasst bevorzugt die Schritte:
- Anschließen eines Steckers bzw. eines Steckersystems wie vorbeschrieben und Bestromung des Steckers oder des Steckersystems, so dass die Bremse ohne Aktivierung des Motors geöffnet werden kann. Ferner wird auch ein Verfahren für den Normalbetrieb mit einem entsprechenden Stecker wie vorbeschrieben und der Vorrichtung beansprucht.

Zusammenfassend ermöglicht die vorliegende Offenbarung unter anderem, dass die Wartung und Montage von Vorrichtungen mit Motor und Motorbremse vereinfacht wird.

Im Folgenden werden verschiedene Beispiele detailliert unter Bezugnahme auf die Figuren beschrieben. Gleiche bzw. ähnliche Elemente in den Figuren werden hierbei mit gleichen Bezugszeichen versehen. Die Offenbarung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche. Es zeigen
Figur 1 ein Beispiel eines ersten Steckers wie hier beschrieben wird;
Figur 2 ein Beispiel einer Vorrichtung wie hier beschrieben wird;
Figur 3 ein Beispiel eines Steckersystems/Adapters/Kabels wie hier beschrieben wird;
Figur 4 ein Beispiel eines Steckersystems/Adapters/Kabels wie hier beschrieben wird;
Figur 5 ein Beispiel eines ersten Steckers wie hier beschrieben wird mit einer Vorrichtung wie hier beschrieben wird;
Figur 6 ein Beispiel eines Steckersystems wie hier beschrieben wird mit einer Vorrichtung wie hier beschrieben wird; und
Figur 7 ein Beispiel eines Steckersystems wie hier beschrieben wird mit einer Vorrichtung wie hier beschrieben wird.

Vorab sei darauf hingewiesen, dass die hier beschriebenen Aspekte bevorzugt beim Arbeiten mit Motoren mit elektromagnetischer Bremse zum Einsatz kommen können. Besonders nützlich sind sie bei der Wartung und der Montage an Maschinen mit derartigen Motoren, beispielsweise Kraftfahrzeugprüftstände. Andere Anwendungen sind auch abgedeckt.

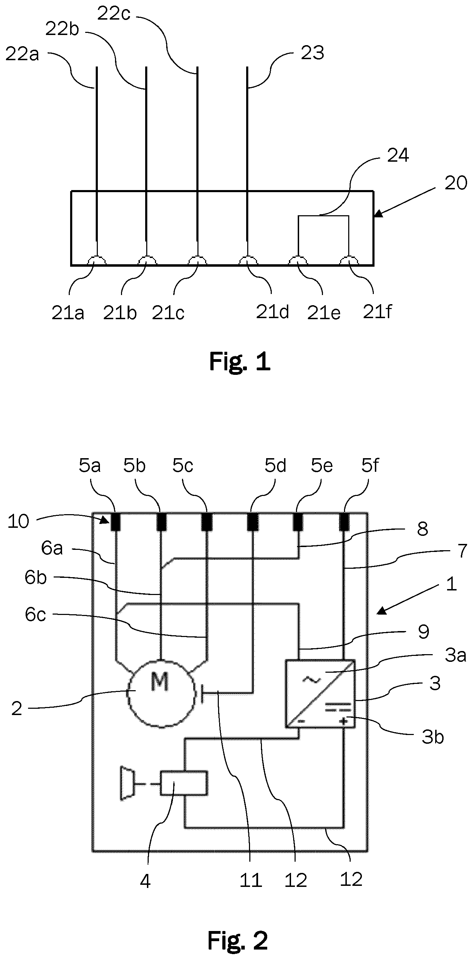

Figur 1 zeigt einen ersten Stecker 20 zum Anschluss an eine Vorrichtung 1, die beispielsweise ein Prüfstand oder eine andere Maschine sein kann, die einen (Drehstrom-)motor 2 mit einer elektromagnetischen Bremse 4 aufweist. Weiterhin umfasst die Vorrichtung 1, wie im Zusammenhang mit Figur 2 näher erläutert wird, auch einen ersten elektrischen Gleichrichter 3, der die Bremse 4 mit Strom versorgt. Die Bremse 4 ist im stromlosen Zustand geschlossen, d.h. sie blockiert den Motor 2.

Der erste Stecker 20 kann mit einer Anschlusseinrichtung 10 der Vorrichtung 1 bevorzugt steckend verbunden werden, um die Vorrichtung 1 mit elektrischem Strom zu versorgen/zu bestromen. Die räumliche und/oder mechanische Ausprägung der Anschlusseinrichtung 10 ist nicht festgeschrieben und kann beispielsweise teilweise die Form einer Buchse, eines Steckers oder dgl. aufweisen, um den ersten Stecker 20 aufzunehmen. Die konkrete Formgebung hängt auch von der des ersten Steckers 20 ab. Ist dieser männlicher Formgebung, so weist die Anschlusseinrichtung 10 bevorzugt eine weibliche Anschlussformgebung auf und umgekehrt. Weiterhin weist der erste Stecker 20 inverse Kontaktmittel 21a-f auf. Die Kennzeichnung mit "invers" soll bedeuten, dass die Kontaktmittel 21a-f des ersten Steckers 20 die umgekehrte Formgebung bezüglich männlicher oder weiblicher Formgebung zu ihren direkten Gegenkontaktmitteln 5a-f der Vorrichtung 1 aufweisen. Beispielsweise können die Kontaktmittel 5a-f der Vorrichtung 1 männliche Form, beispielsweise Pins, Stifte oder dgl., haben und die inversen Kontaktmittel 21a-f können weibliche Form, z.B. Öffnungen bzw. Aufnahmen, aufweisen. Die Formgebung kann einheitlich über die jeweiligen Kontaktmittel sein oder auch gemischt, d.h. männliche und weibliche Kontaktmittel der Vorrichtung 1 und/oder des ersten Steckers 20.

Drei der Vielzahl inverser Kontaktmittel 21a-f, hier im Beispiel diese mit den Bezugszeichen 21a, 21b, 21c, sind mit einer elektrischen Zuleitung 22a-c verbunden, die mehrphasig sein kann, um den Drehstrommotor 2 mit Strom zu versorgen. Weiterhin kann ein Nullleiter 23 vorgesehen sein, der mit einem weiteren Kontaktmittel 21d verbunden sein kann. Die Verbindung zwischen einer Leitung und einem Kontaktmittel kann mechanisch mittels Löten, Crimpen, Schraubverbindung, Klemmverbindung oder dgl. ausgeführt sein. Die mechanische Verbindung ist nicht gleichzusetzen mit einer elektrischen Verbindung. Ferner weist der erste Stecker 20 eine Überbrückungsleitung 24 auf, die zwei inverse Kontaktmittel 21a-f, hier konkret im Beispiel die mit den Bezugszeichen 21e und 21f, elektrisch miteinander verbinden und bevorzugt kurzschließen. Dazu kann die Überbrückungsleitung 24 innerhalb eines lediglich schematisch angedeuteten Gehäuses des ersten Steckers 20 angeordnet sein. Die technische Funktion dieser Anordnung der hier beispielhaft sechs gezeigten inversen Kontaktmittel 21a-f, deren Zahl höher oder niedriger sein kann, wird im weiteren Beschreibungsverlauf noch klarer werden. Auch kann die in Figur 1 gezeigte konkrete Belegung der inversen Kontaktmittel 21a-f abweichend ausgeführt sein und diese richtet sich maßgeblich nach der Belegung der Gegenkontaktmittel z.B. der Vorrichtung 1. Grundsätzlich können auch unbelegte Kontaktmittel vorgesehen sein. Der erste Stecker 20 kann auch als Kupplung oder Adapter oder dgl. bezeichnet oder ausgeführt werden. Die elektrischen Zuleitungen 22a-c können mit einem nicht gezeigten Stecker verbunden sein, um diesen an das Netz anzuschließen, bspw. das konventionelle "Haushalts"-stromnetz oder andere Zugänge zum Stromnetz (Steuerung/Anschluss beispielsweise über einen Schaltschrank).

Figur 2 zeigt die Vorrichtung 1 mit dem Motor 2, bevorzugt ein asynchroner Drehstrommotor 2, der Bremse 4, dem Gleichrichter 3, dessen Ausgang 3b Gleichstrom für die Bremse 4 bereitstellt und an dessen Eingang 3a Wechselstrom eingespeist wird. Die vorteilhaften elektrischen Verbindungen zwischen den bereits erläuterten Kontaktmitteln 5a-5f der Anschlusseinrichtung 10 der Vorrichtung 1 und dem Motor 2 bzw. dessen nicht (explizit) gezeigten Polen, dem Gleichrichter 3 und der Bremse 4 wird nun erläutert:
So zeigt die Figur 2 insgesamt drei Motoranschlussleitungen 6a-6c, wovon jeweils eine mit jeweils einem Kontaktmittel 5a-f, hier beispielhaft 5a-c, sowie einem unterschiedlichen Pol des Motors 2 verbunden ist und für die Bestromung/Aktivierung/Stromversorgung des Motors 2 vorgesehen sind. Ferner kann eine Nullleitung 11 vorgesehen sein, die ebenfalls mit einem eigenen Kontaktmittel, hier beispielhaft 5d, verbunden sein kann. Darüber hinaus sind zumindest zwei weitere Kontaktmittel, hier beispielhaft mit den Bezugszeichen 5e und 5f, vorgesehen. Eines dieser beiden Kontaktmittel, hier im Beispiel 5e, ist mit einer ersten elektrischen Verbindungsleitung 8 verbunden, die elektrisch mit einer der drei Motoranschlussleitungen 6a-6c verbunden ist. Hier im Beispiel ist dies die Leitung 6b, es kann aber auch eine andere Motoranschlussleitung 6a-6c sein. Ferner ist das hier gezeigte Kontaktmittel mit dem Bezugszeichen 5f mittels einer Gleichrichteranschlussleitung 7 mit dem Eingang 3a des Gleichrichters 3 verbunden. Weiterhin ist zumindest eine weitere, d.h. eine zweite elektrische Verbindungsleitung 9 vorgesehen, die eine elektrische Verbindung zwischen einer Motoranschlussleitung 6a-6c, die abweichend von derjenigen ist, mit der die erste elektrische Verbindungsleitung 8 verbunden ist, und einem Eingang 3a des Gleichrichters 3 herstellt. Im vorliegenden Beispiel ist die zweite Verbindungsleitung mit der Motoranschlussleitung 6a verbunden.

Ferner liegen allgemeine elektrische Leitungen 12 vor, wie beispielsweise diese, die die Bremse 4 mit dem Ausgang 3b (bzw. den Ausgangselektroden) des Gleichrichters 3 verbinden. Weitere Leitungen können genauso vorgesehen sein wie andere aktive oder passive schaltungstechnische Bauteile, beispielsweise elektrische Widerstände und dgl., die hier in der schematischen Darstellung der Figuren nicht gezeigt sind.

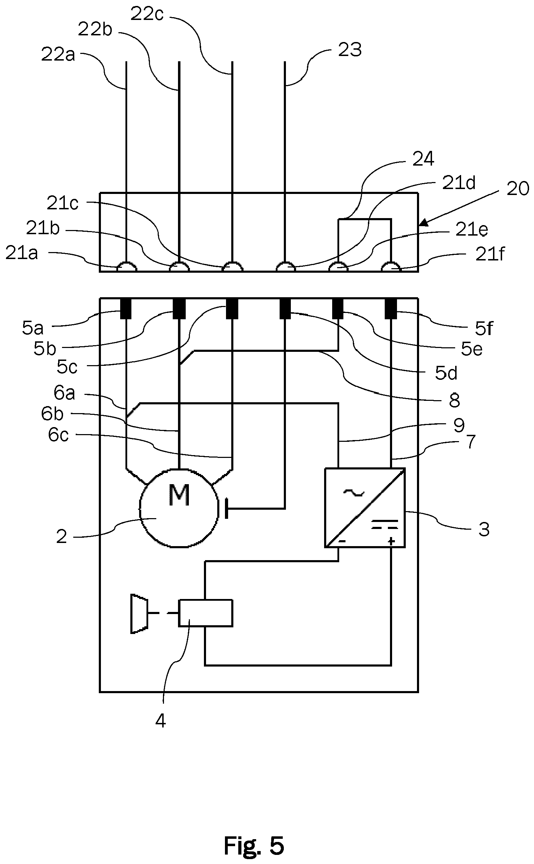

Zu der Figur 5 springend zeigt sich dann eine erste Einsatzmöglichkeit des ersten Steckers 20 und der Vorrichtung 1. Schematisch soll hier, wenn auch getrennt gezeigt, eine Steckverbindung zwischen dem ersten Stecker 20 und der Vorrichtung 1 dargestellt werden, die dann den Betrieb der Vorrichtung 1 mittels der Stromversorgung über den ersten Stecker 20 aufzeigt. Beispielhaft könnte die in Figur 5 gezeigte Steckverbindung somit dem Normalbetrieb der Vorrichtung 1 entsprechen, bei dem der Motor 2 und der Gleichrichter 3 mit elektrischem Strom über die Zuleitungen 22a-22c versorgt werden. Hierbei zeigt sich auch die Funktion der ersten Verbindungsleitung 8 sowie der Überbrückungsleitung 24, die Strom von der Motoranschlussleitung 6b über das Kontaktmittel 5e in den ersten Stecker 20 leiten und dort über das Kontaktmittel 5f zu dem Gleichrichter 3. Ferner wird über die zweite elektrische Verbindungsleitung 9 Strom von einer anderen Motoranschlussleitung, hier 6a, ebenfalls an den Gleichrichter 3 geleitet, so dass der Gleichrichter 3 den Strom in (pulsierenden) Gleichstrom umwandeln kann und an die Bremse 4 leiten kann.

Im Normalbetrieb gemäß Figur 5 kann die Brücke/Überbrückungsleitung 24 im ersten Stecker 20 somit u.a. dafür sorgen, dass beim Bestromen des Motors 2 die Bremse 4 öffnet. Besondere technische Vorteile bringt die Brücke/Überbrückungsleitung 24 dann im weiter unten beschriebenen Einsatz, wie z.B. bei Verfahren betreffend die Montage oder Wartung der Vorrichtung 1.

Weiterhin können auch Modifikationen der Konfiguration des Steckers 20 und der Vorrichtung 1 vorgesehen sein. Beispielsweise kann die erste Verbindungsleitung 8 entfallen und stattdessen kann dann die Brückenleitung 24 zwischen den inversen Kontaktmitteln 21b und 21f verlaufen. Dies reduziert auch vorteilhaft die Anzahl der (inversen) Kontaktmittel 5/21.

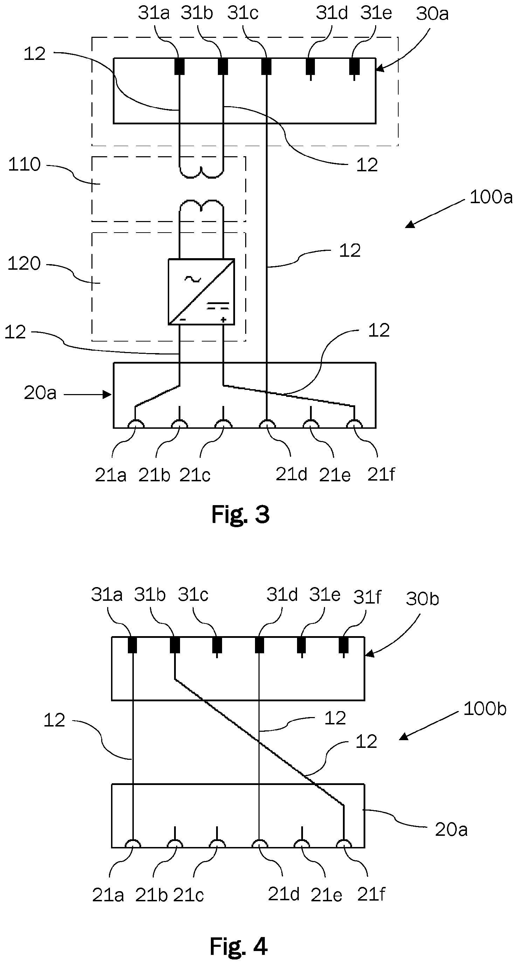

In einer weiteren Modifikation kann zusätzlich auch die zweite Verbindungsleitung 9 entfallen bzw. kann diese das Kontaktmittel 5e mit dem Eingang des Gleichrichters 3 verbinden (statt die Motoranschlussleitung 6a mit dem Eingang des Gleichrichters 3 zu verbinden, wie die Figur 2 zeigt). In dieser weiteren Modifikation liegen dann zwei Brückenleitungen 24 (nicht dargestellt) in dem Stecker 20 vor. Eine Brückenleitung verbindet die inversen Kontaktmitteln 21b und 21f und eine die inversen Kontaktmitteln 21a und 21e. Die Zuleitungen/elektrischen Leitungen 12 in den Steckern 20a gemäß den Steckersystemen 100a und 100b sind bei dieser Modifikation ebenfalls verändert und an die modifizierten Leitungsanordnungen innerhalb der Vorrichtung 1 angepasst. So sind die inversen Kontaktmittel 21e und 21f mit Zuleitungen 12 belegt; anstatt der inversen Kontaktmittel 21a und 21f, wie es beispielsweise die Figuren 3 und 4 darstellen.

Figur 3 zeigt ein Steckersystem (Bremsentriegelungsdapter/-kabel) 100a, das beispielsweise ein Adapter und/oder Kabel sein kann, und verschiedene Konfigurationen annehmen kann, wie die gestrichelten Boxen um einzelne Bauteile herum darstellen. Eine Konfiguration des Steckersystems 100a umfasst gemäß Figur 3, d.h. bei Auslassung aller gestrichelt umrandeten Bauteile, lediglich einen ersten Stecker 20a, der wie zu Figur 1 beschrieben inverse Kontaktmittel 21a-f aufweist, die in dieser Konfiguration für das Steckersystem 100a jedoch im Hinblick auf elektrische Zuleitungen von einer elektrischen Stromquelle anders verdrahtet/verschaltet sind. So sind in Figur 3 drei elektrische Leitungen 12 gezeigt, wovon eine an den Nullleiter anschließbar ist (hier am Kontaktmittel 21d) und zwei andere mit Kontaktmitteln des Steckers 20a (hier beispielhaft 21a und 21f) verbunden sind und als elektrische Zuleitungen, wie 22a-c in Figur 1, elektrischen Strom für den Betrieb der Vorrichtung 1 von einer Stromquelle transportieren. In diesem Fall wird Wechselstrom direkt an die inversen Kontaktmittel (im Beispiel) 21a und 21f geleitet, die mit Kontaktmitteln 5a-f der Vorrichtung 1 verbunden sind, wovon eine mit einer Motoranschlussleitung 6a verbunden ist, die elektrisch mit der zweiten elektrischen Verbindungsleitung 9 verbunden ist und eine mit der Gleichrichteranschlussleitung 7 verbunden ist. Die im Zusammenhang mit Figur 2 beschriebene Verschaltung der elektrischen Leitungen innerhalb der Vorrichtung 1 ermöglicht dann insbesondere aufgrund der zweiten elektrischen Verbindungsleitung 9, dass der Motor 2 nicht aktiviert wird, jedoch der Gleichrichter 3; und somit die Bremse 2 geöffnet werden kann.

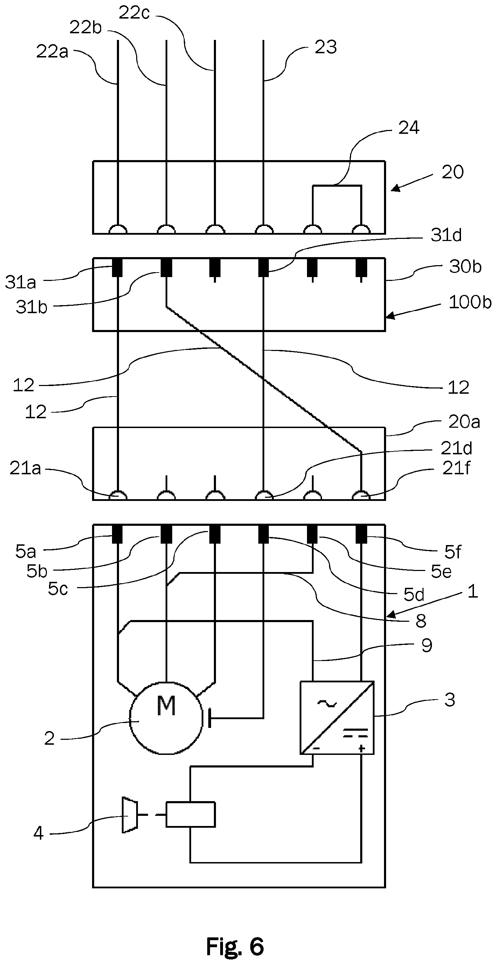

Eine zu oben vergleichbare Konfiguration eines Steckersystems 100b zeigt die Figur 4, bei der der erste Stecker 20a mit einem zweiten Stecker 30b verbunden ist, der wiederrum Kontaktmittel 31a-f aufweist. Elektrische Leitungen 12, wie im oben beschriebenen Beispiel zu dem Steckersystem 100a, verbinden zumindest die inversen Kontaktmittel 21a und 21f mit Kontaktmitteln, z.B. 31a und 31b sowie 31d, des zweiten Steckers 30b, elektrisch. Der zweite Stecker 30b kann dann mit einer Stromquelle verbunden werden und der Gleichrichter 3 der Vorrichtung 1 ohne Aktuierung des Motors 2 betrieben werden. Dieser Einsatz wird in Figur 6 darstellt, wobei hier noch zusätzlich, als weitere Option, der erste Stecker 20 mit der Brückenleitung 24 genutzt wird, der dann erst die elektrischen Zuleitungen 22a-c angeschlossen hat. Die Konfiguration gemäß Figur 6 zeigt somit, dass zwei der drei Phasen der hier gezeigten dreiphasigen Zuleitung 22a-c mittels der Kontaktmittel 31a und 31b des zweiten Steckers 30b genutzt werden, um den Gleichrichter 3 via die elektrischen Leitungen 12 zwischen dem ersten unteren (bzw. dritten) Stecker 20a und dem zweiten Stecker 30b, zwischen den beiden Steckern 20a und 30b und über die Kontaktmittel 5a und 5f der Vorrichtung 1 betreiben zu können, ohne dass der Motor 2 aktiviert wird.

Weiterhin und zurück zu der Figur 3 und weiteren Konfigurationen des Steckersystems/Adapters 100a, der zusätzlich zu dem bereits beschriebenen ersten Stecker 20a (wobei das Bezugszeichen 20a bei Einsatz des ersten Steckers 20 gemäß Figur 1, auch einen dritten Stecker 20a bezeichnen kann, um eine Unterscheidung zu verbessern) weitere Bauteile aufweisen kann. In einer weiteren Konfiguration ist ein zweiter Stecker 30a vorgesehen, der bei dem Vorliegen eines optionalen Spannungswandlers (Transformator) 110 und/oder dem Vorliegen eines optionalen zweiten Gleichrichters 120, wie in Figur 3 gezeigt ausgeführt sein kann. Insbesondere kann der zweite Stecker Kontaktmittel 31a bis 31e aufweisen (wobei auch mehr oder weniger vorgesehen sein können) und davon kann beispielsweise ein Kontaktmittel 31c mit einer elektrischen Leitung 12 verbunden sein, die mit dem Nullleiter 12 der Vorrichtung 1 verbindbar sein kann. Weitere zwei Kontaktmittel, hier beispielhaft 31a und 31b, können mit dem Eingang des zweiten Gleichrichters 120 oder des Spannungswandlers 110 verbunden sein und Netzstrom in Form von Starkstrom oder Wechselstrom dem Spannungswandler 110 und/oder dem zweiten Gleichrichter 120 zuführen. Der Spannungswandler 110 kann den technischen Vorteil mit sich bringen, dass auch unterschiedliche Spannungen nutzbar gemacht werden können. Der zweite Gleichrichter 120 kann u.a. die Möglichkeit eröffnen, Netzstrom zu nutzen. Somit können die Steckersysteme 100a gemäß Figur 3 unterschiedliche Konfigurationen für verschiedene Einsatzzwecke bereitstellen und ein flexibles Einsatzspektrum eröffnen.

In anderen Worten kann das Steckersystem 100a bzw. der Bremstriegelungsadapter einen Netzanschluss ermöglichen, wobei der Adapter auch als Kabel oder Kombination daraus ausgestaltet sein kann. Optional kann ein zweiter Stecker 30a bzw. Steckerverbinder an der Netzanschlussseite passend für unterschiedlichste Haussteckdosen, z.B. Schuko Stecker, Cekon Stecker, etc., ausgeprägt sein. Ferner optional können Phase und Neutralleiter (an den Kontaktmitteln 31a und 31b in Figur 3) der Haussteckdose auf den Eingang des zweiten Gleichrichters 120 führen. Ferner optional können diese Phase und Neutralleiter (an den Kontaktmitteln 31a und 31b in Figur 3) der Haussteckdose auf eine Spannungsanpassung und anschließend auf den Eingang des zweiten Gleichrichters 120 führen. Ferner optional kann der Ausgang des zweiten Gleichrichters 120 auf die Kontaktmittel 21a-f führen, die im gesteckten Zustand mit dem ersten Gleichrichter 3 der Vorrichtung 1 verbunden sind. Außerdem ist es auch möglich, dass optional zwei Phasen direkt auf die Kontaktmittel 21a-f führen, die im gesteckten Zustand mit dem Gleichrichter 3 der Vorrichtung 1 verbunden sind.

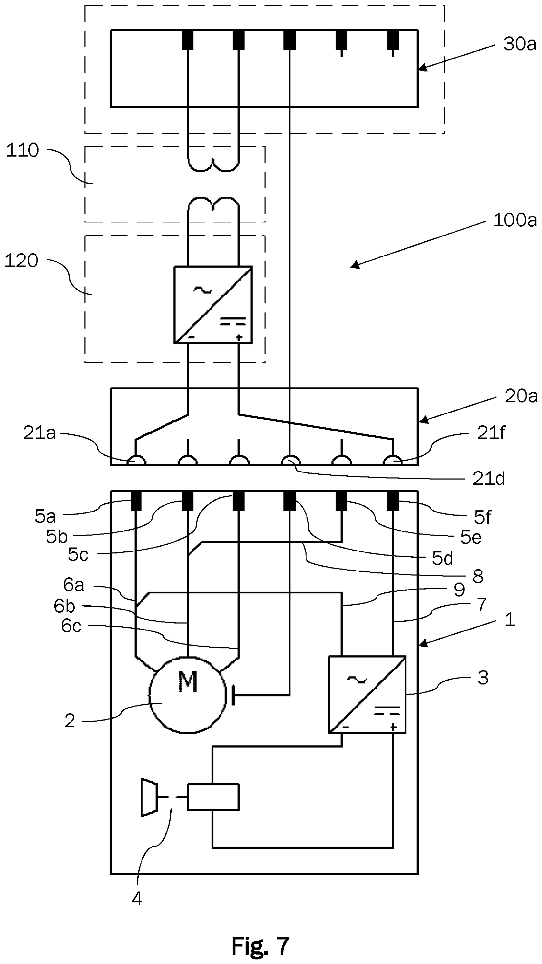

Die Figur 7 veranschaulicht die möglichen Konfigurationen des Steckersystems 100a beim Anschluss an eine Netzsteckdose. Zwar sind das Steckersystem 100a und die Vorrichtung 1 getrennt dargestellt, aber dies dient nur der besseren Lesbarkeit und es soll hier ein gesteckter Zustand zwischen der Anschlusseinrichtung 10 und dem erstem Stecker 20a dargestellt sein. Dazu greifen die (inversen) Kontaktmittel 5a-f und 21a-f ineinander ein. Je nach Konfiguration des Steckersystems 100a, wie oben beschrieben, wird elektrischer Strom über einen Spannungswandler 110 und/oder einen zweiten Gleichtrichter 120 auf die in der Figur 7 gezeigten Kontaktmittel 5a und 5f geleitet, so dass aufgrund der ebenfalls bereits beschriebenen Verschaltung dieser Kontaktmittel 5a und 5f der Gleichrichter 3 ohne den Motor 2 betrieben werden kann, d.h. die Bremse 4 gelöst werden kann. Noch einmal: Davon abweichend ermöglicht das Steckersystem 100b gemäß Figur 4, dass in Verbindung mit dem ersten Stecker 20 gemäß Figur 1 der Gleichrichter 3 der Vorrichtung über das Steckersystem 100b betrieben werden kann, da nur zwei Phasen der Zuleitungen 22a-c des ersten Steckers von dem Steckersystem 100b weitergeleitet werden.

Es kann somit zusammenfassend die Bremsenentriegelung einfacher und mit weniger Aufwand in einer Vorrichtung 1 mit einem Motor 2 und einer elektromagnetischen Bremse 4 vorgenommen werden und dies flexibel in unterschiedlichen Anwendungsszenarien bzw. bei unterschiedlichen Stromversorgungsszenarien.

Das heißt, die technischen Vorteile der hier beschriebenen Aspekte kommen insbesondere zum Tragen, wenn im Fall der Wartung oder Montage von Maschinen und Anlagen (Vorrichtung 1) die elektromagnetische Bremse 4 am Motor 2 nicht mit großen Aufwand beispielsweise mechanisch gelöst/abmontiert werden soll. Die Bremse 4 kann gelüftet bzw. gelöst werden, ohne dass dabei der Motor 2 angeregt werden müsste und der Motor 2 bzw. die Maschine/Anlage kann trotz elektromagnetischer Bremse 4 gedreht werden.

Im beispielhaft in Figur 5 gezeigten "Normalbetrieb" kann die Brücke (Überbrückungsleitung 24 bzw. Brückenleitung 24) im ersten Stecker 20 dazu führen, dass beim Bestromen des Motors 2 die Bremse 4 öffnet. Beim Einsatz des "Bremsentriegelungsadapters Motorleitung" (d.h. bspw. Steckersystem 100b) gemäß Figur 6 kann die Verbindung der elektrischen Zuleitung/Motorleitung 22a-c mit dem Motoranschluss/Anschlusseinrichtung 10 über den Bremsentriegelungsadapter 100b realisiert werden. Im Adapter 100b werden nur zwei der Phasen der Motorleitung 22a-c weitergeführt. Diese führen direkt auf den Gleichrichter 3, der eine (pulsierende) Gleichspannung erzeugt, die wiederum die elektromagnetische Bremse 4 lösen kann. Beim Einsatz des "Bremsentriegelungsadapter Netzanschluss" (d.h. bspw. Steckersystem 100a) gemäß Figur 7 kann die Verbindung vom Hausnetz zunächst auf einen zweiten Gleichrichter 120 führen. Diese pulsierende Gleichspannung aus dem zweiten Gleichrichter 120 kann anschließend den Gleichrichter 3 passieren und die Bremse 4 lösen.

Ein entsprechendes Verfahren zur Montage oder Wartung der Vorrichtung 1 kann somit umfassen, dass ein Steckersystem 100a, 100b mit der Vorrichtung 1 verbunden wird und mit Strom versorgt wird, um die Bremse 4 ohne Aktivierung des Motors 2 zu lösen. Der Normalbetrieb der Vorrichtung 1 kann beispielsweise durch Anschließen und mit Strom beaufschlagen des ersten Steckers 20 erfolgen. Die Wartung/Montage kann ferner auch nur durch ein Kontaktieren des ersten Steckers 20a des Steckersystems 100a durchgeführt werden. Alle diese Möglichkeiten und Verfahrensoptionen sind technisch mit weniger Aufwand verbunden als herkömmliche Lösungen.

### Bezugszeichen

1 Vorrichtung
2 (Drehstrom-)Motor
3 Gleichrichter
4 elektromagnetische Bremse
5a-f Kontaktmittel
6a-c Motoranschlussleitung
7 Gleichrichteranschlussleitung
8 erste elektrische Verbindungsleitung
9 zweite elektrische Verbindungsleitung
10 Anschlusseinrichtung
11 Nullleiter
12 elektrische Leitungen
20, 20a erster Stecker oder dritter Stecker
21a-f inverse Kontaktmittel
22a-c elektrische Zuleitungen verschiedener Phasen
23 Nullleiter
24 Überbrückungsleitung/Brückenleitung/Brücke
100a,b Steckersystem, Adapter, Kabel
30a,b zweiter Stecker
110 elektrischer Spannungswandler
120 zweiter elektrischer Gleichrichter

## Patentansprüche

1. Vorrichtung (1) umfassend
- einen Drehstrommotor (2),
- einen elektrischen Gleichrichter (3) zur Umwandlung von Drehstrom in Gleichstrom,
- eine elektromagnetische Bremse (4), die mit einem Gleichstromausgang des elektrischen Gleichrichters (3) elektrisch verbunden ist,
- eine Anschlusseinrichtung (10), die eine Vielzahl elektrischer Kontaktmittel (5a-f) aufweist, und
- elektrische Leitungen, die zwischen den Kontaktmitteln und dem Drehstrommotor oder dem Gleichrichter angeordnet sind, wobei die elektrischen Leitungen zumindest umfassen:
eine Vielzahl elektrischer Motoranschlussleitungen (6a-c), die jeweils ein Kontaktmittel (5a-f) mit dem Drehstrommotor elektrisch verbinden, zumindest eine elektrische Gleichrichteranschlussleitung (7), die ein Kontaktmittel (5a-f) mit einem Eingang (3a) des Gleichrichters verbindet, zumindest eine erste elektrische Verbindungsleitung (8), die ein Kontaktmittel (5a-f) mit einer Motoranschlussleitung (6a-c) verbindet und zumindest eine zweite elektrische Verbindungsleitung (9), die eine andere Motoranschlussleitung (6a-c) mit einem Eingang (3a) des Gleichrichters verbindet.

2. Vorrichtung (1) nach Patentanspruch 1, **gekennzeichnet dadurch, dass** die Kontaktmittel (5a-f) der Anschlusseinrichtung (10) jeweils mit zumindest einer elektrischen Leitung verbunden sind.

3. Vorrichtung (1) nach zumindest einem der voranstehenden Patentansprüche, **gekennzeichnet dadurch, dass** für jeden Pol des Drehstrommotors (2) eine Motoranschlussleitung (6a-c) vorgesehen ist, die jeweils einen Pol mit einem Kontaktmittel (5a-f) verbindet.

4. Vorrichtung (1) nach zumindest einem der voranstehenden Patentansprüche, **gekennzeichnet dadurch, dass** eine elektrische Leitung als Schutzleitung (11) mit dem Drehstrommotor (2) und einem weiteren Kontaktmittel (5a-f) verbunden ist.

5. Vorrichtung (1) nach zumindest einem der voranstehenden Patentansprüche, **gekennzeichnet dadurch, dass** der Drehstrommotor (2) zumindest dreipolig ausgeführt ist und die Anschlusseinrichtung (10) zumindest sechs Kontaktmittel (5a-f) aufweist, wobei jedes von drei Kontaktmitteln (5a-f) mit einer einzelnen Motoranschlussleitung (6a-c) belegt sind und die drei Motoranschlussleitungen (6a-c) mit jeweils einem Pol des Drehstrommotors (2) verbunden sind, ein Kontaktmittel (5a-f) mit einer Schutzleitung (11), die mit dem Drehstrommotor verbunden ist, verbunden ist, ein Kontaktmittel (5a-f) mit der Gleichrichteranschlussleitung (7) verbunden ist und ein Kontaktmittel (5a-f) mit der ersten elektrischen Verbindungsleitung (8) verbunden ist.

6. Vorrichtung (1) nach zumindest einem der voranstehenden Patentansprüche, **gekennzeichnet dadurch, dass** die Anschlusseinrichtung (10) eingerichtet ist, eine Steckverbindung mit einem Gegenelement herzustellen, und die Kontaktmittel (5a-f) entweder weibliche Kontaktöffnungen oder männliche Kontaktstifte umfassen.

7. Stecker (20) zum Anschluss an die Vorrichtung (1) gemäß einem der Patentansprüche 1-6 umfassend eine Vielzahl inverser Kontaktmittel (21a-f),
wobei die inversen Kontaktmittel (21a-f), die mit einem Kontaktmittel (5a-f) der Anschlusseinrichtung (10) verbindbar sind, die jeweils mit einem Pol des Drehstrommotors (2) verbunden sind, mit elektrischen Strom führenden Leitungen (22a-c) unterschiedlicher Phasen verbunden sind und die inversen Kontaktmittel (21a-f), die mit den Kontaktmitteln (5a-f) der Anschlusseinrichtung (10) verbindbar sind, die mit der ersten elektrischen Verbindungsleitung (8) und der Gleichrichteranschlussleitung (7) verbunden sind, mittels einer Brückenleitung (24) miteinander elektrisch verbunden sind.

8. Stecker (20a) zum Anschluss an die Vorrichtung (1) gemäß einem der Patentansprüche 1-6 umfassend eine Vielzahl inverser Kontaktmittel (21a-f), wobei ein inverses Kontaktmittel (21a-f), das im mit der Anschlusseinrichtung (10) gesteckten Zustand mit der zweiten elektrischen Verbindungsleitung (9) elektrisch verbunden ist, und ein weiteres inverses Kontaktmittel (21a-f), das im mit der Anschlusseinrichtung (10) gesteckten Zustand mit der Gleichrichteranschlussleitung (7) elektrisch verbunden ist, jeweils mit einer stromführenden Zuleitung (22a-c, 12) verbunden sind oder verbindbar sind.

9. Steckersystem (100a) zum Anschluss an die Vorrichtung (1) gemäß einem der Patentansprüche 1-6 umfassend einen ersten Stecker (20a) gemäß Patentanspruch 8 und einen zweiten Stecker (30a) mit einer Vielzahl Kontaktmitteln (31a-e), einem zweiten elektrischen Gleichrichter (120) zum Umwandeln von Drehstrom in Gleichstrom, wobei zwei Kontaktmittel (31a-e) des zweiten Steckers (30a) mittels elektrischer Leitungen (12) jeweils mit einem Drehstromeingang des zweiten elektrischen Gleichrichters (120) verbunden sind und zwei inverse Kontaktmittel (21a-f) des ersten Steckers (20a) mittels elektrischer Leitungen (12) jeweils mit einem Gleichstromausgang des zweiten elektrischen Gleichrichters (120) verbunden sind, und wobei eines der beiden inversen Kontaktmittel (21a-f) im mit der Anschlusseinrichtung (10) gesteckten Zustand mit der zweiten elektrischen Verbindungsleitung (9) elektrisch verbunden ist und das andere der beiden inversen Kontaktmittel (21a-f) im mit der Anschlusseinrichtung gesteckten Zustand mit der Gleichrichteranschlussleitung (7) elektrisch verbunden ist.

10. Steckersystem (100a) zum Anschluss an die Vorrichtung (1) gemäß einem der Patentansprüche 1-6 umfassend einen ersten Stecker (20a) gemäß Patentanspruch 8 und einen zweiten Stecker (30a) mit einer Vielzahl Kontaktmitteln (31a-e), einem zweiten elektrischen Gleichrichter (120) zum Umwandeln von Wechsel-/Drehstrom in Gleichstrom und einem Spannungswandler (110),
wobei zwei Kontaktmittel (31a-e) des zweiten Steckers mittels elektrischer Leitungen (12) jeweils mit einem Eingang des Spannungswandlers (110) verbunden sind, der Ausgang des Spannungswandlers (110) mit einem Wechsel-/Drehstromeingang des zweiten elektrischen Gleichrichters (120) verbunden ist und zwei inverse Kontaktmittel (21a-f) des ersten Steckers (20a) mittels elektrischer Leitungen (12) jeweils mit einem Gleichstromausgang des zweiten elektrischen Gleichrichters (120) verbunden sind, und wobei eines der beiden inversen Kontaktmittel (21a-f) im mit der Anschlusseinrichtung (10) gesteckten Zustand mit der zweiten elektrischen Verbindungsleitung (9) elektrisch verbunden ist und das andere der beiden inversen Kontaktmittel im mit der Anschlusseinrichtung gesteckten Zustand mit der Gleichrichteranschlussleitung (7) elektrisch verbunden ist.

11. Steckersystem (100b) zum Anschluss an die Vorrichtung (1) gemäß einem der Patentansprüche 1-6 umfassend einen ersten Stecker (20a) gemäß Patentanspruch 8 und einen zweiten Stecker (30b) mit einer Vielzahl Kontaktmittel (31a-e), wobei ein Kontaktmittel (31a-e) des zweiten Steckers (30b) mittels einer elektrischen Leitung (12) mit einem inversen Kontaktmittel (21a-f), das im mit der Anschlusseinrichtung (10) gesteckten Zustand mit der zweiten elektrischen Verbindungsleitung (9) elektrisch verbunden ist, verbunden ist und ein weiteres Kontaktmittel (31a-e) des zweiten Steckers (30b) mittels einer elektrischen Leitung (12) mit einem inversen Kontaktmittel (21a-f), das im mit der Anschlusseinrichtung (10) gesteckten Zustand mit der Gleichrichteranschlussleitung (7) elektrisch verbunden ist, verbunden ist.

12. System umfassend die Vorrichtung 1 gemäß zumindest einem der Patentansprüche 1-6 und einem Stecker gemäß Patentanspruch 7 oder gemäß Patentanspruch 8.

13. System umfassend die Vorrichtung 1 gemäß zumindest einem der Patentansprüche 1-6 und einem Steckersystem (100a, 100b) gemäß einem der Patentansprüche 9 bis 11.

14. Verfahren zum Öffnen einer elektromagnetischen Bremse einer Vorrichtung (1) gemäß einem der Patentansprüche 1-6, umfassend die Schritte:
- Anschließen eines Steckers gemäß Patentanspruch 8 oder Anschließen eines Steckersystems (100a, 100b) gemäß einem der Patentansprüche 9-11,
- Bestromung des Steckers oder des Steckersystems.

15. Verfahren zum Betreiben einer Vorrichtung (1) gemäß einem der Patentansprüche 1-6, umfassend die Schritte:
- Anschließen eines Steckers (20) gemäß Patentanspruch 7,
- Bestromung des Steckers (20).
